# EUROPÄISCHE PATENTANMELDUNG

(11) **EP 4 521 359 A1**
(43) Veröffentlichungstag der Anmeldung: **12.03.2025**
(21) Anmeldenummer: 23195404.1
(22) Anmeldetag: 05.09.2023
(51) Int. Cl.: G06V 10/82, G06V 20/52

(54) **VERFAHREN ZUM ERZEUGEN VON EINGANGSDATEN FÜR EIN NEURONALES NETZWERK ZUM BETREIBEN EINER MASCHINE MITTELS EINES ÜBERWACHUNGSSYSTEMS, COMPUTERPROGRAMMPRODUKT, COMPUTERLESBARES SPEICHERMEDIUM SOWIE ÜBERWACHUNGSSYSTEM**

(71) Anmelder: Siemens Aktiengesellschaft, 80333 München (DE)
(72) Erfinder: Bischoff, Martin, 85653 Aying, Großhelfendorf (DE); Eichenseher, Matthias, 93176 Beratzhausen (DE); Halbgewachs, Sascha, 91056 Erlangen (DE)
(74) Vertreter: Siemens Patent Attorneys

(57) **Zusammenfassung**

Die Erfindung betrifft ein Verfahren zum Erzeugen von Eingangsdaten (14) für ein neuronales Netzwerk (16) zum Betreiben einer Maschine (109 mittels eines Überwachungssystems (12), mit den Schritten:
- Erfassen einer Umgebung (26) der Maschine (10) mittels einer optischen Erfassungseinrichtung (18) des Überwachungssystems (12);
- Erzeugen von zumindest einem Bild (28) in Abhängigkeit von der erfassten Umgebung (26) mittels der optischen Erfassungseinrichtung (18);
- Übertragen des zumindest eines erfassten Bilds (28) an eine elektronischen Recheneinrichtung (20) des Überwachungssystems (12); und
- Bearbeiten des erfassten Bilds (28) zu den Eingangsdaten (14) in Abhängigkeit von einem vorgegebenen Bearbeitungsalgorithmus (30) mittels der elektronischen Recheneinrichtung (20) .

Ferner betrifft die Erfindung ein Computerprogrammprodukt, ein computerlesbares Speichermedium sowie ein Überwachungssystem (12).

## Beschreibung

Die Erfindung betrifft ein Verfahren zum Erzeugen von Eingangsdaten für ein neuronales Netzwerk zum Betreiben einer Maschine mittels eines Überwachungssystems gemäß dem geltenden Patentanspruch 1. Ferner betrifft die Erfindung ein Computerprogrammprodukt, ein computerlesbares Speichermedium sowie ein Überwachungssystem.

Insbesondere in der Industrieautomatisierung spielen künstliche Intelligenz-basierte Bilderkennungs- und Bildverarbeitungs-Algorithmen eine immer wichtigere Rolle. Computer-Vision ist ein fundamentaler Bestandteil von Artificial Perception, dem künstlichen Wahrnehmen der Umwelt, was wiederum die Grundlagen für autonom handelnde Systeme beziehungsweise Maschinen bildet. Konkrete Beispielanwendungen und Entwicklungsprojekte für KI-basierte (Künstliche Intelligenz) Bildverarbeitungsalgorithmen, auf die sich die nachfolgende Erfindung, jedoch nicht ausschließlich, bezieht, sind KI-basierte Robotersteuerung, die autonom beispielsweise beliebige Objekte greifen, verschiedene Batterietypen zerlegen, Pakettransporter entladen, Paletten be- und entladen sowie zuverlässig Personen erkennen können.

Zum Training der KI-Algorithmen werden meist reale 3D-Kameradaten verwendet, zum Beispiel im RGB-D Datenformat, wie es Tiefenbildkameras liefern. Diese Bilddaten sind meist mit verschiedenen Störeffekten behaftet, durch die Objekte, zum Beispiel Reflexionen, komplexe Oberflächenbeschaffenheit oder dergleichen, die Umgebung, beispielsweise Staub, Nebel, Verdeckung, ungünstige Beleuchtung oder dergleichen, oder den Sensor selbst, beispielsweise Pixel-Auflösungslimits oder beschlagene Linse, entstehen. Entsprechend sind die Störeffekte sehr anwendungs-und situationsbezogen und von der konkreten Hardware, Umgebung, Kameraposition, Tageszeit, Saison und dergleichen abhängig.

Oft liegen zu wenig reale Bilddaten vor, insbesondere bei neuen Bilderkennungsanwendungen, für neue autonome Systeme oder auch von außergewöhnlichen Fällen, insbesondere Fehlerfällen, deren Unterscheidung von typischen Normalfällen der künstlichen Intelligenz antrainiert werden soll. Um schnell viele Bilddaten zu generieren, wird daher oft auf 3D-Simulationen zurückgegriffen. Aufgrund ihrer exakten Wiederholbarkeit eignen sich Simulationen insbesondere auch zum KI-Training via Reinforcement Learning und zur Validation von Modellen, damit eine gute Vergleichbarkeit und damit eine Bewertbarkeit hergestellt werden kann.

Künstlich generierte Daten, zum Beispiel aus Simulationen, werden allgemein als synthetische Daten bezeichnet. Aus dem Training der KI-Anwendungen werden synthetische Daten auch zur Evaluation von bereits trainierten KI-Bilderkennungsalgorithmen verwendet, zum Beispiel für Performance und Qualitätsbenchmarks. Auch zur Fehlerursache sind synthetische Daten sehr hilfreich. Wenn zum Beispiel in bestimmten Szenarien im Betrieb die Bilderkennung fehlschlägt, kann man diese Szenarien in Simulationsumgebungen modellieren, um den Fehler ohne Hardware-Aufwand und ohne Risiken zu reproduzieren, um sie anschließend zum Beispiel durch Nachtrainieren der künstlichen Intelligenz zu beheben.

Das Problem an synthetischen Bilddaten aus 3D-Simulationen ist, dass sie oft nicht hinreichend akkurate reale Bilddaten reproduzieren. Das Rendering ist oft nicht hinreichend fotorealistisch und Störeffekte werden oft überhaupt nicht, oder nicht hinreichend realistisch, modelliert. Dieser Unterschied zwischen Realdaten und synthetischen Daten wird auch als sogenannten Reality Gap bezeichnet.

Diese Reality Gap stellt für Bilderkennungsalgorithmen ein großes Problem dar. Wird eine künstliche Intelligenz an synthetischen Daten mit einem zu großen Reality Gap trainiert, führt das im Betrieb mit realen Bilddaten oft zu falschem und suboptimalem Verhalten. Selbst wenn die synthetischen Bilddaten für das menschliche Auge auf den ersten Blick identisch aussehen, können die Merkmale, die die künstliche Intelligenz im Training erlernt hat, deutlich von den Merkmalen abweichen, die in realen Bildern vorkommen.

Beispiele von Problemen von synthetischen Daten, die zu falsch trainierten Merkmalen führen können, sind beispielsweise ideal-glatte Flächen mit einfarbigen Texturen zur Identifikation von Objekt-Oberflächen, ein bestimmter Schattenwurf, der zur Untersuchung von Objekten mittrainiert wurde, zu regelmäßige Störungen, sodass die künstliche Intelligenz antrainiert wurde, bestimmte Pixel oder Bildbereiche von der künstlichen Intelligenz komplett zu ignorieren.

Generell wäre es für Trainings-Validierungs- und Evaluationsaufgaben von KI-basierten Bilderkennungsalgorithmen sehr hilfreich, wenn keine Reality Gap existieren würde, und synthetische und reale Bilddaten beliebig austauschbar wären.

Im Stand der Technik wird diese Reality Gap durch verschiedene Techniken minimiert. Beispielsweise wird ein fotorealistischer Renderer, ein KI-basierter Renderer oder detaillierte physikalische Simulationsmodelle von Licht-Absorption und Reflexion auf Oberflächen sowie Umwelt und Sensorik genutzt. Ferner kann die Darstellung der Szene in verschiedenen Umgebungen mit verschiedenen Beleuchtungs-, Reflexions-, Blend- und Verschattungseffekten, Oberflächen, Kamerawinkeln oder dergleichen synthetisiert werden.

Zur Minimierung des Reality Gaps kann beliebig viel Aufwand investiert werden. Es wird immer einen Rest-Unterschied zwischen realen und synthetischen Bilddaten geben, der die Ursache für falsches Verhalten der künstlichen Intelligenz im Betrieb sein kann. Wie bereits beschrieben, müssen hierbei oft anwendungsspezifische Störeffekte modelliert werden, die zum Beispiel nur bei bestimmten Kameratypen entstehen.

Aufgabe der vorliegenden Erfindung ist es, ein Verfahren, ein Computerprogrammprodukt, ein computerlesbares Speichermedium sowie ein Überwachungssystem zu schaffen, mittels welchen zuverlässig ein Betrieb einer Maschine überwacht werden kann und/oder zumindest eine Funktion der Maschine gesteuert werden kann.

Diese Aufgabe wird durch ein Verfahren, ein Computerprogrammprodukt, ein computerlesbares Speichermedium sowie ein Überwachungssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Erzeugen von Eingangsdaten für ein neuronales Netzwerk zum Betreiben einer Maschine mittels eines Überwachungssystems. Es wird eine Umgebung der Maschine mittels einer optischen Erfassungseinrichtung des Überwachungssystems erfasst. Es erfolgt das Erzeugen von zumindest einem Bild in Abhängigkeit von der erfassten Umgebung mittels der optischen Erfassungseinrichtung. Das zumindest eine erfasste Bild wird an eine elektronische Recheneinrichtung des Überwachungssystems übertragen. Das erfasste Bild wird zu den Eingangsdaten bearbeitet in Abhängigkeit von einem vorgegebenen Bearbeitungsalgorithmus mittels der elektronischen Recheneinrichtung.

Insbesondere sieht somit die Erfindung vor, statt die Reality Gap gemäß dem Stand der Technik zu minimieren, werden die Daten der optischen Erfassungseinrichtung vorverarbeitet und als Eingangsdaten für den künstlichen Intelligenz-basierten Bildverarbeitungsalgorithmus bereitgestellt. Dadurch erhält das neuronale Netzwerk eine idealisierte, vereinfachte und aufbereitete Darstellung der Realität ohne Störeffekte. Dadurch kann zum einen einfacher das anwendungsspezifische Perception-Ergebnis ermittelt werden, wie beispielsweise die greifbaren Objekte und deren Griffpositionen. Zum anderen wird durch die aufbereiteten Bilddaten eine neue Referenz, insbesondere ein neues Ground Truth, erzeugt. Dadurch stellt sich für die künstliche Intelligenz-Anwendung die Aufgabe der Minimierung eines Reality Gaps nicht mehr und es muss nicht mehr zwischen synthetischen und realen Daten unterschieden werden. Das Gesamtproblem wird dadurch in zwei wesentlich leichter beherrschbare Teilprobleme aufgeteilt.

Insbesondere ist somit vorgesehen, dass auch die real erfassten Daten in synthetische Daten umgewandelt werden und als Eingangsdaten für das neuronale Netzwerk verwendet werden.

Insbesondere durch die Vorverarbeitung von beispielsweise dreidimensionalen Kameradaten sowie die realisierten Referenzdaten kann mit weniger Aufwand als bisher das Reality Gap minimiert beziehungsweise verhindert werden. Synthetische und reale Bilddaten werden dadurch beliebig austauschbar. Die Arbeiten, künstlich realistische Störeffekte in synthetische Bilddateien zu generieren, werden obsolet. Dies reduziert Entwicklungsaufwand und die Komplexität.

Die Referenzdaten, die sowohl aus dreidimensionalen-Simulationen als auch realen dreidimensionalen-Kameras generiert werden, sind beim Training der künstlichen Intelligenz und bei der Evaluation beliebig kombinier- und austauschbar. Aus 3D-Simulationen können Referenzdatensätze generiert werden, und die künstliche Intelligenzanwendung bereits trainiert werden, bevor die reale Maschine existiert. Dies reduziert die Zeit für die Inbetriebnahme von autonomen Systemen.

Da die Störeffekte in den Bildverarbeitungsalgorithmen bei typischen Greif- und Manipulationsaufgaben eher störend als hilfreich sind, und auch die fotorealistische Darstellung von Objekten typischerweise keinen Mehrwert zur Ermittlung der Griffpunkte liefert, vereinfacht diese reduzierte Darstellung die Trainingsaufgabe. Es kann mit weniger Zeit-, Rechenressourcen- und Energieaufwänden bessere Trainingsergebnisse erzielt werden. Fehler im Betrieb können durch Erstellung derselben Referenzdatensätze in Simulationen leichter reproduziert werden.

Für die Vorbearbeitung der realen dreidimensionalen Kameradaten und Simulationsdaten zu Referenz-Datensätzen können anwendungsunabhängige Standardtools, beispielsweise Segmentierung oder Filtermethoden als Bearbeitungsalgorithmus, eingesetzt werden. Die Referenzdaten können sich als neuer-Industriestandard, als Input für Artificial Vision Perception etablieren.

Insbesondere erzeugt somit das neuronale Netzwerk einen nutzbaren Output. Dieser Output kann eine Bewertung für eine Qualität eines Produkts sein, oder ein Eingriff in eine Steuerung der Maschine sein oder ein Output für einer Nutzer der Maschine oder auch weitere Informationen beziehungsweise Steuerungen betreffen. Somit können mittels des neuronalen Netzwerks sowohl Überwachungsfunktionen für die Maschine als auch Steuerungsfunktionen für die Maschine übernommen beziehungsweise durchgeführt werden.

Gemäß einer vorteilhaften Ausgestaltungsform werden die erzeugten Eingangsdaten an das neuronale Netzwerk zur Bewertung und/oder für ein Training übertragen. Insbesondere kann somit vorgesehen sein, dass sowohl für das Training des neuronalen Netzwerks als auch im Betrieb des Überwachungssystems, und insbesondere im Betrieb der Maschine, die Eingangsdaten genutzt werden können. Beispielsweise kann beim Training vorgesehen sein, dass die erzeugten Eingangsdaten zum Training des neuronalen Netzwerks entsprechend genutzt werden. Im Betrieb können beispielsweise reale Bilddaten entsprechend dem Betrieb der Maschine erfasst werden und dann wiederum in das neuronale Netzwerk gegeben werden, um eine entsprechenden Auswertung durchzuführen. Somit können hochfunktional die Eingangsdaten verwendet werden.

Eine weitere vorteilhafte Ausgestaltungsform sieht vor, dass die erzeugten Eingangsdaten als Trainingsdaten zum Trainieren des neuronalen Netzwerks erzeugt werden. Insbesondere können somit die Eingangsdaten zum Trainieren des neuronalen Netzwerks verwendet werden. Das neuronale Netzwerk wird somit nicht an realen Daten trainiert, sondern an den vorverarbeiteten/synthetischen Daten, sodass es zu einer Minimierung der Reality Gap, beispielsweise beim Bereitstellen weiterer Simulationsdaten, kommen kann.

Ferner hat es sich als vorteilhaft erwiesen, wenn zusätzlich Simulationsdaten der Maschine als Trainingsdaten für das neuronale Netzwerk erzeugt werden. Beispielsweise können auf Basis einer Simulation der Maschine die entsprechenden Simulationsdaten erzeugt werden. Diese dienen dann wiederum als Eingangsdaten, um das neuronale Netzwerk entsprechend trainieren zu können. Da insbesondere die realen Daten nun vorverarbeitet sind, kommt es zu einer geringen Reality Gap zwischen den Simulationsdaten und den vorverarbeiteten Daten, wodurch ein zuverlässiges Training des neuronalen Netzwerks realisiert werden kann.

Ferner hat es sich als vorteilhaft erwiesen, wenn die Eingangsdaten zum Überwachen eines Betriebs der Maschine genutzt werden. Insbesondere kann somit im Betrieb eine Bewertung der Maschine durchgeführt werden. Somit kann beispielsweise eine entsprechende Greifaufgabe beziehungsweise Manipulationsaufgabe durch die Maschine zuverlässig erfüllt werden.

Weiter vorteilhaft ist, wenn auf Basis eines Objektsegmentierungsverfahrens als Bearbeitungsalgorithmus das erfasste Bild bearbeitet wird. Insbesondere die Objektsegmentierung ist ein Standard-Verfahren zur Erkennung von Objekten in beispielsweise zweidimensionalen Farbbildern. Dabei wird jedem Pixel eines Bildes eine bestimmte Klasse zugeordnet. Typischerweise werden zur Segmentierung von den Real-Bild-Daten ebenfalls neuronale Netzwerke, insbesondere konvolute neuronale Netzwerke (Convolutional Neuronal Networks - CNN) eingesetzt. Aus Simulationen kann direkt, insbesondere auch ohne künstliche Intelligenz, ein segmentiertes Bild generiert werden, da durch das Simulationsmodell bekannt ist, zu welcher Klasse ein Objekt gehört. Somit kann auf Basis der Objektsegmentierung zuverlässig eine Vorverarbeitung der erfassten Daten erfolgen und dem neuronalen Netzwerk zur Bewertung und/oder zum Training zur Verfügung gestellt werden.

Es hat sich weiterhin als vorteilhaft erwiesen, wenn das Bild zusätzlich mit einer Tiefeninformation erfasst wird. Tiefeninformationen werden beispielsweise aus Tiefenbildkameras zum Beispiel im sogenannten RGBD-Format direkt mit ausgegeben. Gerade beispielsweise an Kanten mit großen Tiefenunterschieden sind die Tiefendaten oft stark verrauscht. Hier ist es vorteilhaft, diese mit Kantenglättungsfiltern nachzubearbeiten. Dabei können insbesondere auch die Informationen aus der Objekt-Segmentierung verwendet werden, um die Umrisse von Objekten zu berücksichtigen. Aus Simulationsmodellen können störungsfrei die Tiefeninformationen für jeden Pixel direkt per sogenannten Retracing ermittelt werden. Insbesondere soll somit statt der ursprünglichen realen Bilddaten ein segmentiertes Bild mitsamt der insbesondere optional mit einem Rauschfilter versehenen Tiefeninformation als Input verwendet werden. Die Tiefeninformationen können gemeinsam mit dem segmentierten Bild, zum Beispiel im RGBD-Format, kommuniziert werden. Alternativ sind auch sogenannten Daten im PLY-Datenformat und verwandte Gitternetzdatenformate möglich, in denen aus den einzelnen segmentierten Objekten und der Tiefenbildinformation bereits dreidimensionale-Gitternetzstrukturen generiert werden. Somit kann zuverlässig eine Bewertung stattfinden.

Es hat sich weiterhin als vorteilhaft erwiesen, wenn ein Objekt im erfassten Bild klassifiziert wird und die Bewertung auf Basis der Klassifikation durchgeführt wird. Insbesondere kann somit auf Basis der Objektsegmentierung auch eine Klassifizierung des Objekts stattfinden, wobei auf Basis dessen wiederum eine vereinfachte Segmentierung durchgeführt werden kann und somit die realen Bilddaten entsprechend vorverarbeitet werden können. Somit kann mit wenig Rechenaufwand eine entsprechende Bewertung durchgeführt werden.

Ebenfalls vorteilhaft ist, wenn nur eine Bewertung eines vorgegebenen Objekts im erfassten Bild und/oder im segmentierten Bild durchgeführt wird. Insbesondere können somit je nach Anwendung zusätzlich nur die Daten der relevanten Objekte als Input an das neuronale Netz übergeben werden. Soll zum Beispiel in der Anwendung lediglich ein Stuhl innerhalb der Umgebung manipuliert werden, genügt es, für diesen Bildbereich die Daten zu kommunizieren, beziehungsweise im PLY-Datenformat nur dessen Gitternetz bereitzustellen. Stellt zum Beispiel ein Tisch in der Umgebung ein Hindernis bei der Manipulationsaufgabe dar, sollten diese Objektdaten ebenfalls als Input mit in das neuronale Netz einfließen.

Eine weitere vorteilhafte Ausgestaltungsform sieht vor, dass auf das erfasste Bild ein Rauschfilter angewendet wird. Insbesondere kann somit bei dem erfassten Bild ein entsprechendes Entrauschen durchgeführt werden, wodurch eine verbesserte Darstellung der Umgebung realisiert werden kann. Somit ist es ermöglicht, dass die realen Daten entsprechend entrauscht werden und als vorverarbeitete Daten für das neuronale Netzwerk zur Verfügung gestellt werden. Somit ist es ermöglicht, dass auf einfache Art und Weise eine entsprechende Vorverarbeitung durchgeführt wird.

Weiterhin vorteilhaft ist, wenn auf das erfasste Bild eine Kantendetektion und/oder eine Kantenglättung angewendet wird. Insbesondere die sogenannten Denoiser sowie Anti-Aliasing-Filter sind bereits in Computervision-Anwendungen etabliert und gängig. Die Filtermethoden werden auf die realen und synthetischen RGB-Kamerabilder angewendet, mit dem Ziel, auch hier einen neuen, idealisierten Referenzdatensatz zu generieren, der als Input für den künstlichen Intelligenz-basierten Bildverarbeitungsalgorithmus dient.

Auch hier kann alternativ oder ergänzend zusätzlich auch das reale Tiefenbild mit Kantenglättungsfiltern bearbeitet werden, um die Umrisse von Objekten klarer, ähnlicher zu den synthetischen Daten, zu generieren.

Ferner hat es sich als vorteilhaft erwiesen, wenn auf Basis der Bewertung eine Greifaufgabe und/oder Manipulationsaufgabe mittels der Maschine durchgeführt wird. Insbesondere kann somit mittels der Maschine zuverlässig eine Greifaufgabe und/oder eine Manipulationsaufgabe, beispielsweise durch Bewegen von Objekten, durchgeführt werden. Da es sich hierbei um einfache Aufgaben handelt, kann somit die Reality Gap bei diesen Aufgaben entsprechend reduziert werden, wodurch zuverlässig eine entsprechende Greifaufgabe und/oder Manipulationsaufgabe realisiert werden kann.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ebenfalls betrifft die Erfindung daher auch ein computerlesbares Speichermedium mit einem Computerprogrammprodukt nach dem vorhergehenden Aspekt.

Ein nochmals weiterer Aspekt der Erfindung betrifft ein Überwachungssystem zum Erzeugen von Eingangsdaten für ein neuronales Netzwerk zum Betreiben einer Maschine, mit zumindest einer optischen Erfassungseinrichtung und einer elektronischen Recheneinrichtung, wobei das Überwachungssystem zum Durchführen eines Verfahrens nach dem vorhergehenden Aspekt ausgebildet ist. Insbesondere wird das Verfahren mittels des Überwachungssystems durchgeführt.

Das Überwachungssystem weist bevorzugt ein neuronale Netzwerk auf.

Ferner betrifft die Erfindung auch eine Maschine mit einem Überwachungssystem nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, des Überwachungssystems sowie der Maschine anzusehen. Insbesondere das Überwachungssystem sowie die Maschine weisen hierzu gegenständliche Merkmale auf, um entsprechende Verfahrensschritte durchführen zu können.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Im Rahmen der vorliegenden Offenbarung kann ein Objekterkennungsalgorithmus als ein Computeralgorithmus verstanden werden, der in der Lage ist, eines oder mehrere Objekte innerhalb eines bereitgestellten Eingangsdatensatzes, beispielsweise Eingangsbildes, zu identifizieren und zu lokalisieren, beispielsweise indem er entsprechende Begrenzungsboxen oder Bereiche von Interesse, ROI (englisch: "region of interest"), festlegt und insbesondere jeder der Begrenzungsboxen eine entsprechende Objektklasse zuordnet, wobei die Objektklassen aus einem vordefinierten Satz von Objektklassen ausgewählt werden können. Dabei kann die Zuweisung einer Objektklasse zu einer Begrenzungsbox derart verstanden werden, dass ein entsprechender Konfidenzwert oder eine Wahrscheinlichkeit dafür, dass das innerhalb der Begrenzungsbox identifizierte Objekt zu der entsprechenden Objektklasse gehört, bereitgestellt wird. Zum Beispiel kann der Algorithmus für eine gegebene Begrenzungsbox für jede der Objektklassen einen solchen Konfidenzwert oder eine Wahrscheinlichkeit bereitstellen. Die Zuweisung der Objektklasse kann zum Beispiel die Auswahl oder Bereitstellung der Objektklasse mit dem größten Konfidenzwert oder der größten Wahrscheinlichkeit beinhalten. Alternativ kann der Algorithmus auch lediglich die Begrenzungsboxen festlegen, ohne eine entsprechende Objektklasse zuzuordnen.

Algorithmen zur automatischen visuellen Wahrnehmung, die auch als Computer-Vision-Algorithmen, Algorithmen zum maschinellen Sehen oder Machine-Vision-Algorithmen bezeichnet werden können, können als Computeralgorithmen zur automatischen Durchführung einer visuellen Wahrnehmungsaufgabe betrachtet werden. Eine visuelle Wahrnehmungsaufgabe, die auch als Computer-Vision-Aufgabe bezeichnet wird, kann beispielsweise als eine Aufgabe zur Extraktion von visuellen Informationen aus Bilddaten verstanden werden. Insbesondere kann die visuelle Wahrnehmungsaufgabe in einigen Fällen prinzipiell von einem Menschen ausgeführt werden, der in der Lage ist, ein den Bilddaten entsprechendes Bild visuell wahrzunehmen. Im vorliegenden Zusammenhang werden visuelle Wahrnehmungsaufgaben jedoch auch automatisch durchgeführt, ohne dass die Unterstützung eines Menschen erforderlich ist.

Ein Computer-Vision-Algorithmus kann beispielsweise einen Bildverarbeitungsalgorithmus oder einen Algorithmus zur Bildanalyse enthalten, der durch maschinelles Lernen trainiert wird oder wurde und beispielsweise auf einem künstlichen neuronalen Netzwerk, insbesondere einem faltenden neuronalen Netz, basieren kann. Der Computer-Vision-Algorithmus kann beispielsweise einen Objekterkennungsalgorithmus, einen Hinderniserkennungsalgorithmus, einen Objektverfolgungsalgorithmus, einen Klassifikationsalgorithmus einen semantischen Segmentierungsalgorithmus, und/oder einen Tiefenschätzalgorithmus umfassen.

Entsprechende Algorithmen können analog auch basierend auf anderen Eingabedaten als von einem Menschen visuell wahrnehmbaren Bildern durchgeführt werden. Beispielsweise können auch Punktwolken oder Bilder von Infrarotkameras, Lidarsystemen et cetera mittels entsprechend angepasster Computeralgorithmen ausgewertet werden. Streng genommen handelt es sich bei den entsprechenden Algorithmen nicht um Algorithmen zur visuellen Wahrnehmung, da die entsprechenden Sensoren in Bereichen arbeiten können, die visuell, also für das menschliche Auge, nicht wahrnehmbar sind, zum Beispiel im Infrarotbereich. Deshalb werden solche Algorithmen im Rahmen der vorliegenden Erfindung Algorithmen zur automatischen Wahrnehmung bezeichnet. Algorithmen zur automatischen Wahrnehmung schließen also Algorithmen zur automatischen visuellen Wahrnehmung ein, sind aber im Hinblick auf eine menschliche Wahrnehmung nicht auf diese beschränkt. Folglich kann ein Algorithmus zur automatischen Wahrnehmung nach diesem Verständnis einen Computeralgorithmus zur automatischen Durchführung einer Wahrnehmungsaufgabe enthalten, der beispielsweise durch maschinelles Lernen trainiert wird oder wurde und insbesondere auf einem künstlichen neuronalen Netzwerk basieren kann. Zu solchen verallgemeinerten Algorithmen zur automatischen Wahrnehmung können auch Objektdetektionsalgorithmen, Objektverfolgungsalgorithmen, Klassifizierungsalgorithmen und/oder Segmentierungsalgorithmen, zum Beispiel semantische Segmentierungsalgorithmen, gehören.

Falls ein künstliches neuronales Netzwerk zur Implementierung eines Algorithmus zur automatischen visuellen Wahrnehmung verwendet wird, ist eine häufig eingesetzte Architektur die eines faltendes neuronales Netzwerks, CNN. Insbesondere kann ein 2D-CNN auf entsprechende 2D-Kamerabilder angewendet werden. Auch für andere Algorithmen zur automatischen Wahrnehmung können CNNs verwendet werden. Beispielsweise können 3D-CNNs, 2D-CNNs oder 1D-CNNs auf Punktwolken angewendet werden, abhängig von den räumlichen Dimensionen der Punktwolke und den Details der Verarbeitung.

Das Ergebnis oder die Ausgabe eines Algorithmus zur automatischen Wahrnehmung ist abhängig von der spezifischen zugrundeliegenden Wahrnehmungsaufgabe. Beispielsweise kann die Ausgabe eines Objekterkennungsalgorithmus eine oder mehrere Begrenzungsboxen enthalten, die eine räumliche Position und optional eine Orientierung eines oder mehrerer entsprechender Objekte in der Umgebung und/oder entsprechende Objektklassen für das eine oder die mehreren Objekte definieren. Eine Ausgabe eines semantischen Segmentierungsalgorithmus, der auf ein Kamerabild angewendet wird, kann eine Klasse auf Pixelebene für jedes Pixel des Kamerabildes enthalten. Analog dazu kann eine Ausgabe eines semantischen Segmentierungsalgorithmus, der auf eine Punktwolke angewendet wird, eine entsprechende Punktebenen-Klasse für jeden der Punkte enthalten. Die Klassen auf Pixelebene beziehungsweise auf Punktebene können beispielsweise einen Objekttyp definieren, zu dem der jeweilige Pixel oder Punkt gehört.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, der Figur und der Figurenbeschreibung. Die vorstehend in der Beschreibung genannten Merkmale und Merkmalskombinationen sowie die nachfolgend in der Figurenbeschreibung genannten und/oder in der Figur gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigt die einzige Figur ein schematisches Blockschaltbild gemäß einer Ausführungsform einer Maschine mit einer Ausführungsform eines Überwachungssystems.

In der Figur sind gleiche oder funktionsgleiche Elemente mit den gleichen Bezugszeichen versehen.

Die Figur zeigt ein schematisches Blockschaltbild gemäß einer Ausführungsform einer Maschine 10 mit einem Überwachungssystem 12. Das Überwachungssystem 12 ist zum Erzeugen von Eingangsdaten 14 für ein neuronales Netzwerk 16 zum Betreiben der Maschine 10 ausgebildet. Das Überwachungssystem 12 weist hierzu zumindest eine optische Erfassungseinrichtung 18 sowie eine elektronische Recheneinrichtung 20 auf. Die elektronische Recheneinrichtung 20 kann beispielsweise mit einem Simulationsmodell 22 gekoppelt sein.

Das Überwachungssystem 12 ist vorliegend insbesondere zum Erzeugen einer Bewertung 24 der Ausgangsdaten des neuronalen Netzwerks 16 vorgesehen.

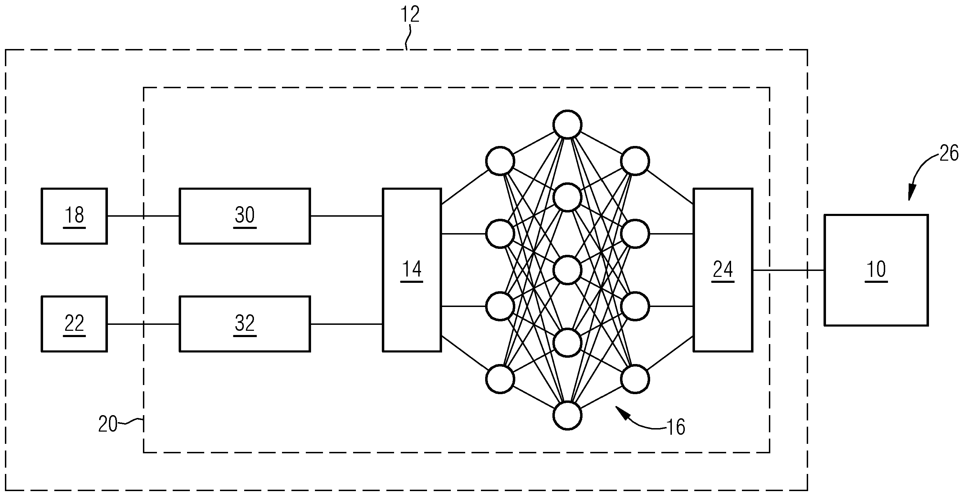

Insbesondere zeigt die Figur, dass mittels des Überwachungssystems 12 ein Verfahren zum Erzeugen der Eingangsdaten 14 für das neuronale Netzwerk 16 durchgeführt werden kann. Es erfolgt das Erfassen einer Umgebung 26 der Maschine 10 mittels der optischen Erfassungseinrichtung 18. Es wird zumindest ein Bild 28 in Abhängigkeit von der erfassten Umgebung 26 mittels der optischen Erfassungseinrichtung 18 erzeugt. Es erfolgt das Übertragen des erfassten Bilds 28 an die elektronische Recheneinrichtung 20 des Überwachungssystems 12 und das Bearbeiten des erfassten Bilds 28 zu den Eingangsdaten 14 in Abhängigkeit von einem vorgegebenen Bearbeitungsalgorithmus 30 mittels der elektronischen Recheneinrichtung 20.

Hierbei ist insbesondere vorgesehen, dass die erzeugten Eingangsdaten 14 an das neuronale Netzwerk 16 zur Bewertung und/oder für ein Training übertragen werden. Ferner werden die erzeugten Eingangsdaten 14 als Trainingsdaten zum Trainieren des neuronalen Netzwerks 16 erzeugt. Ferner kann vorgesehen sein, dass zusätzlich Simulationsdaten 32 der Maschine 10 als Trainingsdaten für das neuronale Netzwerk 16 erzeugt werden. Des Weiteren können die Eingangsdaten 14 zum Überwachen eines Betriebs der Maschine 10 genutzt werden.

Des Weiteren kann vorgesehen sein, dass auf Basis eines Objektsegmentierungsverfahrens als Bearbeitungsalgorithmus 30 das erfasste Bild 28 bearbeitet wird. Hierbei kann das Bild 28 zumindest mit einer Tiefeninformation erfasst werden. Des Weiteren kann ein Objekt im erfassten Bild 28, beispielsweise die Maschine 10, klassifiziert werden und die Bewertung auf Basis der Klassifikation durchgeführt werden. Insbesondere kann nur eine Bewertung eines vorgegebenen Objekts im erfassten Bild 28 und/oder im segmentierten Bild durchgeführt werden.

Des Weiteren kann vorgesehen sein, dass auf das erfasste Bild 28 ein Rauschfilter als Bearbeitungsalgorithmus 30 angewendet wird. Ferner kann auf das erfasste Bild 28 eine Kantendetektion und/oder eine Kantenglättung als Bearbeitungsalgorithmus 30 angewendet werden.

Ferner kann vorgesehen sein, dass auf Basis der Bewertung eine Greifaufgabe und/oder eine Manipulationsaufgabe mittels der Maschine 10 durchgeführt wird.

Insbesondere zeigt somit die Figur, dass das sogenannte Reality Gap minimiert wird, indem die dreidimensionalen Kameradaten vorverarbeitet werden und als Eingang für den KI-basierten Bildverarbeitungsalgorithmus dienen. Die künstliche Intelligenz (vorliegend das neuronale Netzwerk 16) erhält dadurch eine idealisierte, vereinfachte und aufbereitete Darstellung der Realität ohne Störeffekte. Dadurch können zum einen einfacher das anwendungsspezifische Perception Ergebnisse, vorliegend insbesondere mit Bezugszeichen 24 versehen, ermittelt werden, wie beispielsweise die greifbaren Objekte und deren Griffpositionen. Zum anderen können durch die aufbereiteten Bilddaten eine Referenz, insbesondere ein neues Ground Truth, erhalten werden. Dadurch stellt sich für die KI-Anwendung die Aufgabe der Minimierung eines Reality Gaps nicht mehr und es muss nicht mehr zwischen synthetischen und realen Daten unterschieden werden. Das Gesamtproblem wird dadurch in zwei wesentlich leichter beherrschbare Teilprobleme aufgeteilt. Als Referenzdaten können beispielsweise die Alternativen der segmentierten Bilder mit Tiefeninformationen oder die gefilterten Farb- und Tiefenbilder verwendet werden.

Die Segmentierung ist dabei ein Standard-Verfahren zur Erkennung von Objekten in zweidimensionalen Farbbildern. Dabei wird jedem Pixel eines Bildes 28 eine bestimmte Klasse zugeordnet. Typischerweise werden zur Segmentierung von Realbild-Daten ebenfalls neuronale Netzwerke eingesetzt. Aus Simulationen kann direkt, insbesondere auch ohne künstliche Intelligenz, ein segmentiertes Bild 28 generiert werden, da durch das Simulationsmodell bekannt ist, zu welcher Klasse ein Objekt gehört.

Tiefeninformationen werden aus Tiefenbildkameras, zum Beispiel RGBD-Format, direkt mit ausgegeben. Gerade an Kanten mit großen Tiefenunterschieden sind die Tiefendaten oft stark verrauscht. Hier ist es vorteilhaft, dies mit Kantenglättungsfiltern nachzubearbeiten. Dabei können insbesondere auch die Informationen aus der Objektsegmentierung verwendet werden, um die Umrisse von Objekten zu berücksichtigen. Aus Simulationsmodellen können störungsfreie Tiefeninformationen für jeden Pixel direkt per sogenanntem Retracing ermittelt werden.

Gemäß einer ersten Alternative kann also anstatt der ursprünglich realen Bilddaten des Bildes 28 ein segmentiertes Bild mitsamt der optional mit dem Rauschfilter versehenen Tiefeninformationen als Eingang verwendet werden. Die Tiefeninformationen können gemeinsam mit dem segmentierten Bild, zum Beispiel im RGBD-Format, kommuniziert werden. Alternativ sind auch das sogenannte PLY-Datenformat und verwandte Gitternetz-Datenformate möglich, in denen aus den einzelnen segmentierten Objekten und der Tiefeninformation bereits 3D-Gitternetzstrukturen generiert wurden.

Je nach Anwendung können zusätzlich nur die Daten der relevanten Objekte als Eingang an das neuronale Netzwerk 16 übergeben werden. Soll zum Beispiel lediglich ein Stuhl manipuliert werden, genügt es, nur eine entsprechenden Bildbereich zu kommunizieren, beziehungsweise im PLY-Datenformat nur dessen Gitternetz. Stellt zum Beispiel auch ein Tisch in der Umgebung 26 ein Hindernis bei der Manipulationsaufgabe des Stuhles dar, sollten diese Objektdaten ebenfalls als Input in das neuronale Netzwerk 16 einfließen.

Für die Greif-Simulationsaufgaben sind segmentierte Bilder mit Tiefeninformationen ausreichend. Die ursprünglichen RGB-Bilder enthalten redundante Informationen, die bei der Ermittlung von Objekten und Manipulationspositionen eher stören.

In einer weiteren Alternative kann zu der relativ rechenaufwendigen Segmentierung eine Kombination von Standard-Filter-Techniken angewendet werden, um die in der Problembeschreibung erwähnten Störeffekte in realen Bilddaten zu entfernen. Als Filter eignet sich hierfür eine Kombination aus Bildrauschen-Entferner, insbesondere Denoiser, Kantendetektoren und Kantenglättung, welche auch als Anti-Aliasing-Filter bezeichnet werden. Diese Filter-Techniken sind bereits in Computervisionanwendungen etabliert und gängig. Die Filtermethoden werden auf die realen und synthetischen RGB-Kamerabilder angewendet, mit dem Ziel, auch hier einen neuen, realisierten Referenzdatensatz zu generieren, der als Input für den KI-basierten Bildverarbeitungsalgorithmus dient.

Analog zur ersten Alternative kann optional zusätzlich auch das reale Tiefenbild mit Kantenglättungsfiltern bearbeitet werden, um die Umrisse von Objekten klarer, ähnlicher zu den synthetischen Daten, zu generieren.

## Patentansprüche

1. Verfahren zum Erzeugen von Eingangsdaten (14) für ein neuronales Netzwerk (16) zum Betreiben einer Maschine (109 mittels eines Überwachungssystems (12), mit den Schritten:
- Erfassen einer Umgebung (26) der Maschine (10) mittels einer optischen Erfassungseinrichtung (18) des Überwachungssystems (12);
- Erzeugen von zumindest einem Bild (28) in Abhängigkeit von der erfassten Umgebung (26) mittels der optischen Erfassungseinrichtung (18);
- Übertragen des zumindest eines erfassten Bilds (28) an eine elektronischen Recheneinrichtung (20) des Überwachungssystems (12); und
- Bearbeiten des erfassten Bilds (28) zu den Eingangsdaten (14) in Abhängigkeit von einem vorgegebenen Bearbeitungsalgorithmus (30) mittels der elektronischen Recheneinrichtung (20) .

2. Verfahren nach Anspruch 1, **dadurch gekennzeichnet, dass** die erzeugten Eingangsdaten (14) an das neuronale Netzwerk (16) zur Bewertung und/oder für ein Training übertragen werden.

3. Verfahren nach Anspruch 1 oder 2, **dadurch gekennzeichnet, dass**
die erzeugten Eingangsdaten (14) als Trainingsdaten zum Trainieren des neuronalen Netzwerks (16) erzeugt werden.

4. Verfahren nach Anspruch 3, **dadurch gekennzeichnet, dass** zusätzlich Simulationsdaten (32) der Maschine (10) als Trainingsdaten für das neuronale Netzwerk (16) erzeugt werden.

5. Verfahren nach einem der vorhergehenden Ansprüche, **dadurch gekennzeichnet, dass**
die Eingangsdaten (14) zum Überwachen eines Betriebs der Maschine (10) genutzt werden.

6. Verfahren nach einem der vorhergehenden Ansprüche, **dadurch gekennzeichnet, dass**
auf Basis eines Objektsegmentierungsverfahrens als Bearbeitungsalgorithmus (30) das erfasste Bild (28) bearbeitet wird.

7. Verfahren nach Anspruch 6, **dadurch gekennzeichnet, dass** das Bild (28) zusätzlich mit einer Tiefeninformation erfasst wird.

8. Verfahren nach einem der Ansprüche 6 oder 7, **dadurch gekennzeichnet, dass**
ein Objekt im erfassten Bild (28) klassifiziert wird und die Bewertung auf Basis der Klassifikation durchgeführt wird.

9. Verfahren nach einem der Ansprüche 6 bis 8, **dadurch gekennzeichnet, dass**
nur eine Bewertung eines vorgegebenen Objekts im erfassten Bild (28) und/oder im segmentierten Bild (28) durchgeführt wird.

10. Verfahren nach einem der vorhergehenden Ansprüche, **dadurch gekennzeichnet, dass**
auf das erfasste Bild (28) ein Rauschfilter als Bearbeitungsalgorithmus (30) angewendet wird.

11. Verfahren nach einem der vorhergehenden Ansprüche, **dadurch gekennzeichnet, dass**
auf das erfasste Bild (28) eine Kantendetektion und/oder eine Kantenglättung als Bearbeitungsalgorithmus (30) angewendet wird.

12. Verfahren nach einem der vorhergehenden Ansprüche, **dadurch gekennzeichnet, dass**
auf Basis der Bewertung eine Greifaufgabe und/oder eine Manipulationsaufgabe mittels der Maschine (10) durchgeführt wird.

13. Computerprogrammprodukt mit Programmcodemitteln, welche eine elektronische Recheneinrichtung (20) dazu veranlassen, wenn die Programmcodemittel von der elektronischen Recheneinrichtung (20) abgearbeitet werden, ein Verfahren nach einem der Ansprüche 1 bis 12 durchzuführen.

14. Computerlesbares Speichermedium mit einem Computerprogrammprodukt nach Anspruch 13.

15. Überwachungssystem (12) zum Erzeugen von Eingangsdaten (14) für ein neuronales Netzwerk (16) zum Betreiben einer Maschine (10), mit zumindest einer optischen Erfassungseinrichtung (18) und einer elektronischen Recheneinrichtung (20), wobei das Überwachungssystem (12) zum Durchführen eines Verfahrens nach einem der Ansprüche 1 bis 12 ausgebildet ist.
